## Europäisches Patentamt

(19) **European Patent Office**

**Office européen des brevets**

(11) Veröffentlichungsnummer: **0 030 207**
**B1**

(12) # EUROPÄISCHE PATENTSCHRIFT

(45) Veröffentlichungstag der Patentschrift:
17.04.85

(51) Int. Cl.⁴: **B 61 L 23/16**

(21) Anmeldenummer: **80730075.1**

(22) Anmeldetag: **22.11.80**

(54) Sichere Gleisfreimeldeeinrichtung.

(30) Priorität: **28.11.79 DE 2948352**
**22.10.80 DE 3040175**

(43) Veröffentlichungstag der Anmeldung:
**10.06.81 Patentblatt 81/23**

(45) Bekanntmachung des Hinweises auf die Patenterteilung:
**17.04.85 Patentblatt 85/16**

(84) Benannte Vertragsstaaten:
**AT BE CH DE FR IT LI NL**

(56) Entgegenhaltungen:
**DE - A - 1 455 444**
**DE - B - 1 158 548**
**FR - A - 2 118 946**
**US - A - 3 842 334**

**H. Dewald "Tonfrequenzgleistromkreise" an der
Zeitschrift "Signal und Draht" 71 (1979) S. 94-100**

(73) Patentinhaber: **Licentia Patent-Verwaltungs-GmbH,
Theodor-Stern-Kai 1, D-6000 Frankfurt/Main 70 (DE)**

(72) Erfinder: **Lotz, Alfred, Ing.-grad., Büchsenweg 14,
D-1000 Berlin 51 (DE)**
Erfinder: **Schulz, Hans-Jürgen, Ing.-grad.,
Löwensteinring 63, D-1000 Berlin 47 (DE)**

(74) Vertreter: **Schickle, Gerhard, Dipl.-Ing. et al, Licentia
Patent-Verwaltungs-GmbH Theodor-Stern-Kai 1,
D-6000 Frankfurt/Main 70 (DE)**

**Beschreibung**

Die Erfindung betrifft eine sichere Gleisfreimeldeeinrichtung nach dem Oberbegriff des Patentanspruches 1.

Die Gleise bei Eisenbahnen sind in eine Folge von Gleis- und Weichenabschnitte unterteilt. Dies dient zur Sicherung des Zugbetriebes und zum Überwachen des Betriebsablaufes. Sie werden daraufhin überwacht, ob sie durch Fahrzeuge besetzt oder frei sind. Die Gleisabschnitte werden vielfach durch Gleisstromkreise überwacht. Ein Gleisstromkreis besteht aus einer Stromquelle als Sender, der über die Fahrschienen eines Eisenbahngleises einen Empfänger speist. Befindet sich ein Fahrzeug in einem Gleisabschnitt, so wird durch seine Achsen eine niederohmige Verbindung zwischen den Fahrschienen hergestellt. Dadurch gelangt kein Strom mehr in den Empfänger und der Gleisabschnitt wird als besetzt gemeldet.

Es gibt mehrere Möglichkeiten, einen Gleisstromkreis in einem Gleisabschnitt zu schaffen. So kann ein Gleisabschnitt gegenüber seinem Nachbarabschnitt dadurch isoliert werden, daß in beide Fahrschienen Isolierstöße eingebaut werden. An den Isolierstößen befinden sich dann Differentialgleisdrossel mit mehreren Wicklungen. Zwei dieser Wicklungen, die in Reihe liegen, werden beiderseits der Isolierstöße zwischen die Fahrschienen gelegt und mit ihnen verbunden. Eine weitere Wicklung steht mit einem Sender in Verbindung, während eine weitere Wicklung mit einem Empfänger im benachbarten Gleisabschnitt verbunden ist. Die aus je zwei Wicklungen bestehenden Überbrückungen zwischen den Fahrschienen werden durch Mittelzapfungen zwischen den Wicklungen miteinander verbunden. Eine andere Möglichkeit besteht darin, einen Gleisstromkreis nur einschienig zu isolieren, d. h. daß eine Fahrschiene durchgehend verschweißt ist, während in der anderen Fahrschiene Isolierstöße eingebaut sind. Auch eine Folge aus zweischienig und einschienig isolierten Gleisstromkreisen kann angewendet werden, wobei die Differentialgleisdrossel beim Übergang von einem zweischienig isolierten Gleisabschnitt zu einem einschienig isolierten Gleisabschnitt derart abgewandelt wird, daß die Überbrückung durch zwei Wicklungen beim einschienig isolierten Gleisstromkreis entfällt und die Mittenanzapfung beim zweischienig isolierten Gleisstromkreis direkt auf eine durchgehend verschweißte Fahrschiene des einschienig isolierten Gleisstromkreises geführt wird. Eine weitere Möglichkeit besteht darin, ein Gleis mit durchgehend verschweißten Fahrschienen zu verwenden, wobei die Gleisabschnitte durch elektrische Trennstöße gebildet werden.

Es sind auch bereits Tonfrequenzgleisstromkreise zur Frei- und Besetztmeldung von Gleisabschnitten an durchgehend geschweißten Gleisen bekannt. Dabei können die Isolierstöße durch elektrische Trennstöße ersetzt werden. Die Trennung benachbarter Gleisabschnitte erfolgt durch die Wahl verschiedener Tonfrequenzen (Hans Dewald: »Tonfrequenzgleisstromkreise« aus Signal und Draht, 71 (1979), S. 94—100). Derartige Tonfrequenzgleisstromkreise erfordern jedoch einen hohen Aufwand und zeigen kein Fail-safe-Verhalten.

Es ist auch bereits eine Gleisfreimeldeeinrichtung mit Tonfrequenzgleisstromkreisen bekannt, bei dem die Gleisabschnitte durch zwischen den Gleisen verlegte Koppelspulen begrenzt werden. Die benachbarten, einander überlappenden Gleisabschnitte werden mit mehreren bestimmten von der Grundfrequenz und ihren Harmonischen abweichenden unterschiedlichen Frequenzen beaufschlagt, wobei an die Koppelspulen angeschlossene Empfänger die modulierten Signale über frequenzselektive Filter empfangen und Signalrelais bedienen. Der durch Achsen des Zuges kurzgeschlossene oder bedämpfte Gleisabschnitt oder auch ein Speisefehler läßt das zugehörige Signalrelais abfallen, was als Besetztmeldung gewertet wird (FR-A 2 118 946). Davon geht die Erfindung aus.

Eine derartige Anordnung zeigt zwar bereits weitgehend ein in sich sicheres Verhalten, es muß jedoch durch die Gleisabschnittsbildung mittels Koppelspulen, die speziell verlegt werden müssen, ein erheblicher Aufwand getrieben werden, auch was Sender und Empfänger und deren Abgleich angeht. Darüber hinaus ist ein solches System für isolierte Gleisstromkreise und solche mit elektrischen Trennstößen nicht generell verwendbar.

Aufgabe der Erfindung ist es, eine sichere Gleisfreimeldeeinrichtung zum Überwachen des Gleisabschnittes zu schaffen, die sowohl bei zweischienig als auch einschienig isolierten Gleisstromkreisen als auch bei Gleisstromkreisen mit elektrischen Trennstößen universell verwendbar ist. Darüber hinaus wird schaltungstechnisch eine große Einfachheit und Zuverlässigkeit angestrebt.

Diese Aufgabe wird für eine sichere Gleisfreimeldeeinrichtung der im Oberbegriff des Patentanspruches 1 genannten Art dadurch gelöst, daß sender- und empfängerseitig die Sperrschwingerschaltungen jeweils über eine Diodenbrückenschaltung und einen ersten Platten-Keramikkondensator mit zwei an jedem Plattenbelag diagonal angeordneten Anschlüssen gespeist werden, wobei dem Rückkopplungsübertrager jedes Senders noch ein Verstärker nachgeschaltet ist, der auf einen Ausgangsübertrager arbeitet, über den auch die Betriebsspannung des Verstärkers zugeführt ist, dagegen der Rückkopplungsübertrager jedes Empfängers vorzugsweise seinen Ausgangsübertrager direkt speist und daß das zwischengeschaltete frequenzselektive Filter aus einem weiteren Übertrager mit Schutzwiderstand, einem zweiten Keramikkondensator mit zwei an jedem Plattenbelag diagonal angeordneten Anschlüssen und einer Frequenzdrossel besteht.

Vorteilhafte Ausgestaltungen sind den Unteransprüchen entnehmbar.

Zwar ist es bereits bekannt, Vierklemmen-Kondensatoren auch in Verbindung mit Oszillatoren einzusetzen und damit eine fail-safe-Stromversorgung für die Speisung z. B. eines Relais zu erstellen (US-A-3 842 334), doch hat dies nichts mit der vorliegenden Erfindung und der ihr zugrunde liegenden Aufgabe zu tun.

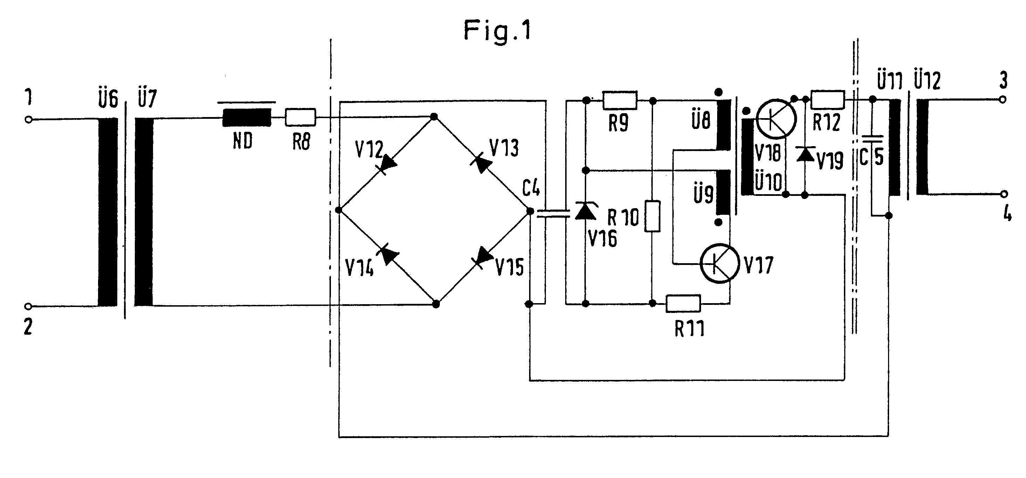

Die Erfindung wird im folgenden anhand von Zeichnungen an einem Ausführungsbeispiel näher erläutert. Als Sender wird eine fail-safe-Schaltung aus Logisafe-Bausteinen (Fig. 1) verwendet. Über Klemmen 1, 2 wird eine Wechselspannung an einen Übertrager mit den Wicklungen Ü6, Ü7 gelegt. Diesem Übertrager ist eine Netzdrossel ND und ein Widerstand R8 nachgeschaltet. Darauf folgt eine Diodenbrückenschaltung V12, V13, V14, V15, deren abgehende Diagonalpunkte auf einen Transistorsperrschwingerkreis mit Rückkopplungsübertrager führen. Der Sperrschwingerschaltkreis besteht aus einem Transistor V17, Primärwicklungen Ü8, Ü9 und einer Sekundärwicklung Ü10 eines Übertragers, Widerständen R9, R10, R11 sowie einem Kondensator C4 zur Stromgegenkopplung. Der Kondensator C4 ist ein Plattenkeramikkondensator mit zwei an jedem Plattenbelag diagonal gegenüber liegend angeordneten Anschlüssen. In der Sperrschwingerschaltung ist ferner noch eine Zenerdiode V16 zur Begrenzung des Stromes angeordnet.

Das Steuerpotential für den Sperrschwingerschaltkreis wird über den Widerstand R8 und die Diodenbrückenschaltung gebildet. Durch den Transistor V17 fließt, bedingt durch die Spannungsteilung der Widerstände R9, R10 im Basiskreis, zunächst ein kleiner Kollektorstrom. Dieser Strom wird mit Hilfe der als Rückkopplungswicklung wirkenden Wicklung Ü9 im Basiskreis des Transistors schnell vergrößert. Die Höhe der Rückkopplungsspannung bestimmt den maximal möglichen Kollektorstrom. Der Widerstand R11 dient zur Kollektorstrombegrenzung. Ist der Maximalwert erreicht, so wird keine Spannung mehr in die Primärwicklungen Ü8 und Ü9 des Übertragers induziert und der Transistor V17 schaltet in den Sperrzustand. Dabei entsteht eine Rückschlagspannung entgegengesetzter Polarität. Hieraus wiederholt sich periodisch dieser Vorgang, d. h. der Transistor wechselt periodisch zwischen den Schaltzuständen »Ein« und »Aus«, solange die Versorgungsspannung ansteht. Die Versorgungsspannung wird somit in eine rechteckförmige Impulsspannung umgeformt und auf die Sekundärseite Ü10 des Übertragers übertragen.

Mit der Wicklung Ü10 des Übertragers ist ein Verstärker verbunden, der aus einem Transistor V18, einer Diode V19 und einem Widerstand R12 aufgebaut ist. Die Betriebsspannung wird sowohl an den Verstärker als auch an eine Wicklung Ü11 eines weiteren Übertragers gelegt. Parallel zu der Wicklung Ü11 liegt ein weiterer Kondensator C5. Die Wicklung Ü12 des Übertragers ist über die Klemmen 3, 4 mit den Fahrschienen verbunden.

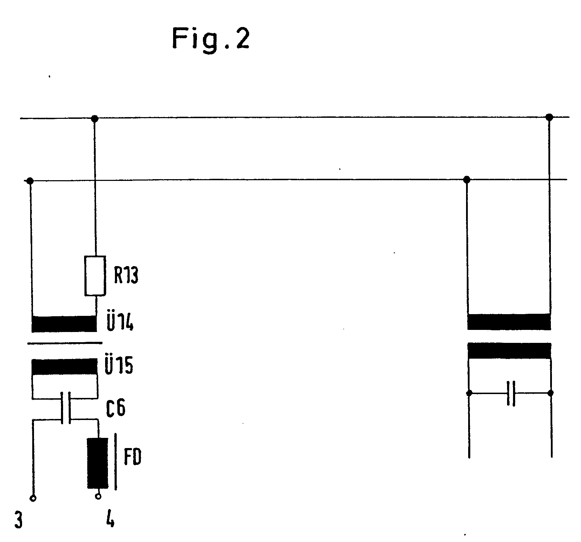

Die Sender sind so ausgelegt, daß benachbarte Gleisabschnitte mit unterschiedlichen Frequenzen beaufschlagt werden. Zwischen Empfänger und Fahrschiene wird ein selektives Frequenzfilter eingeschaltet, wie es in Fig. 2 dargestellt ist. Dieses besteht aus einem Schutzwiderstand R13, einem weiteren Übertrager mit den Wicklungen Ü13, Ü14 und einem weiteren Plattenkeramikkondensator C6 mit zwei an jedem Plattenbelag diagonal gegenüber liegend angeordneten Anschlüssen, sowie einer Filterdrossel FD.

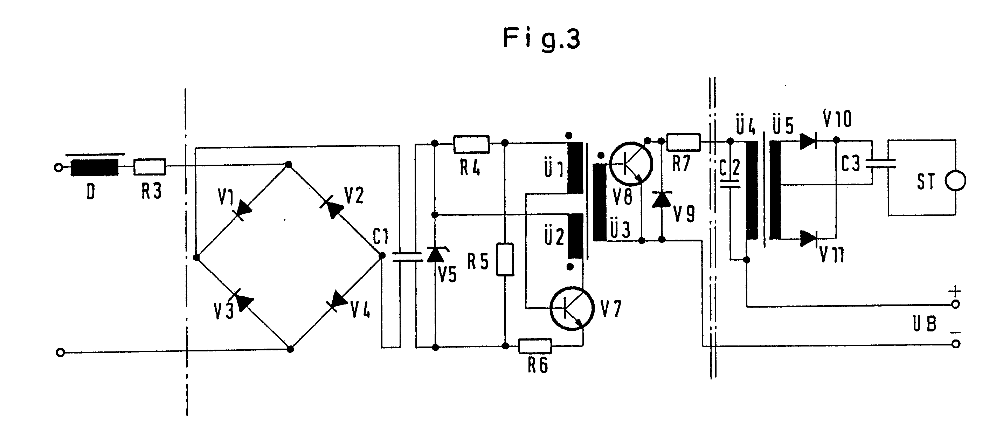

In Fig. 3 ist der Empfänger nach der Erfindung dargestellt.

Einer Differentialgleisdrossel D — bei Verwendung von Isoliertrennstößen — ist über einen Widerstand R3 eine Diodenbrückenschaltung V1, V2, V3, V4 nachgeschaltet, deren abgehende Diagonalpunkte auf einen Transistorsperrschwingerkreis mit Rückkopplungsübertrager führen. Der Sperrschwingerschaltkreis besteht aus einem Transistor V7, Primärwicklungen Ü1, Ü2 und einer Sekundärwicklung Ü3 eines Übertragers, Widerständen R4, R5, R6 sowie einem Kondensator C1 zur Stromgegenkopplung. Der Kondensator C1 ist ein Plattenkeramikkondensator mit zwei an jedem Plattenbelag diagonal gegenüberliegend angeordneten Anschlüssen. In der Sperrschwingerschaltung ist ferner noch eine Zenerdiode V5 zur Begrenzung des Stromes angeordnet.

Mit dem Empfänger ist ein Verstärker, bestehend aus einem Transistor V8, einer Diode V9 und einem Widerstand R7, verbunden. Dabei wird die Betriebsspannung UB an den Verstärker und an die Wicklung Ü4 eines weiteren Übertragers gelegt. Parallel zu der Wicklung Ü4 liegt ein weiterer Kondensator C2. Die Wicklung Ü5 des Übertragers ist über Dioden V10, V11 mit dem Belag eines weiteren Plattenkeramikkondensators C3 verbunden. Der Mittelabgriff der Wicklung Ü5 ist mit dem gegenüberliegenden Plattenbelag des Plattenkeramikkondensators C3 verbunden. Von dem Plattenkeramikkondensator C3 werden die Signale auf ein Stellglied St übertragen.

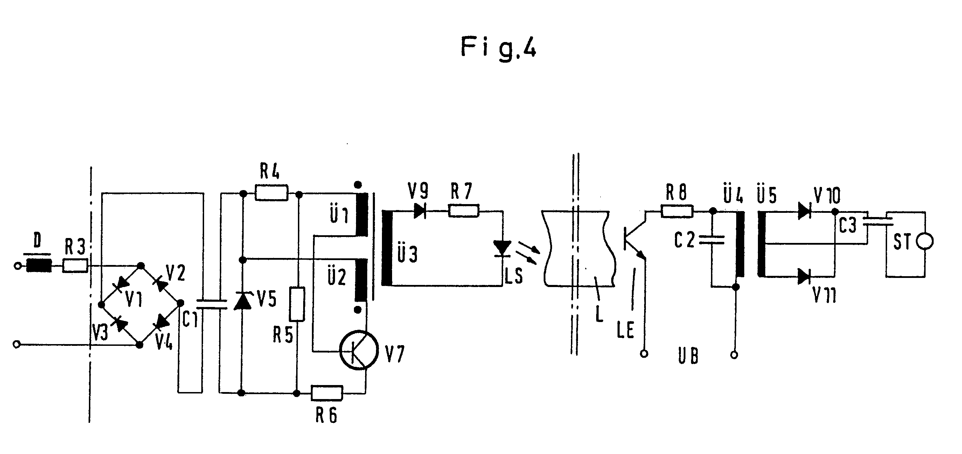

Fig. 4 zeigt die potentialfreie Übertragung der Signale zum Empfänger über einen Lichtsender LS, über Lichtleitfasern L und einen Lichtempfänger LE mit einem Widerstand R8 am Stellglied.

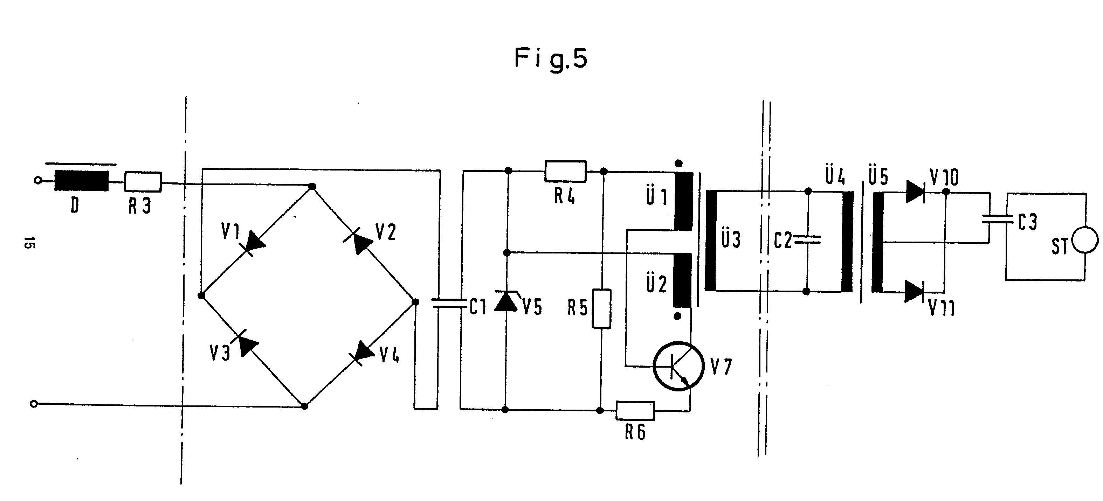

In Fig. 5 ist die Übertragung über Kupferkabel dargestellt, bei der im Empfänger kein Betriebsstrom benötigt wird. Der Kondensator C2 dient zur Abstimmung.

Beim Auftreten einer beliebigen Störung an der Schaltungsanordnung, z. B. durch Bauelementeausfall, Kurzschluß oder Unterbrechung kann kein Signal an das Stellglied gelangen. Bei dem Ausfall des Transistors V7 kann die Sperrschwingerschaltung nicht ausschwingen. Bricht einer der Kondensatoren C1 oder C3 an einer beliebigen Stelle, so kann ebenfalls kein Signal zu dem Stellglied gelangen. Das gleiche gilt für Änderungen der Widerstandswerte gegen Null bzw. gegen unendlich.

Jeder mögliche Fehler (einschließlich Leitungsunterbrechung) läßt eine Gleisbesetztmeldung zustande kommen.

Zur Vermeidung von fehlerhaften Gleisfreimeldungen aufgrund sprungartiger Triebstromänderungen und unsymmetrischer Belastung der Gleisdrosseln muß eine Spannungsbegrenzung für die Empfängerschaltung erfolgen. Ferner muß ein Resonanzabgleich durch den schmalbandigen Frequenzdurchlaß vorgesehen werden. Diesem Zweck dient das selektive Frequenzfilter, bei dem bei vorgegebener Höhe der Gleisüberwachungsspannung eine lineare Übertragung erfolgt, während bei höherer Gleisüberwachungsspannung der Übertrager im Sättigungsbereich arbeitet. Ein evtl. Bruch der Schiene oder Unterbruch bzw. Kurzschluß der Anschlußdrähte oder Defekt der Bauelemente im Sender oder Empfänger kann keine unerwünschte Freimeldung hervorrufen, da dann die Gleisüberwachungsspannung unterbrochen wird (Fail-Safe-Verhalten).

Bei Verwendung von einschienig isolierten Gleisstromkreisen wird die Differentialgleisdrossel ersetzt durch die durchgehende Verbindung einer der Fahrschienen.

Bei Verwendung von durchgehend verschweißten Schienen wird die Differentialgleisdrossel durch einen elektrischen Trennstoß in Form eines Verbinders ersetzt.

**Patentansprüche**

1. Sichere Gleisfreimeldeeinrichtung zum Überwachen eines Gleisabschnittes mit einem Sender, der einen Schwingkreis in Sperrschwingerschaltung mit Rückkopplungsübertrager aufweist und benachbarte Gleisabschnitte mit unterschiedlichen Frequenzen beaufschlagt und ähnlich wie die Sender aufgebaute Empfänger an den Gleisabschnitten die modulierten Signale über frequenzselektive Filter empfangen, dadurch gekennzeichnet, daß sender- und empfängerseitig die Sperrschwingerschaltungen (V17, Ü8, Ü9 bzw. V7, Ü1, Ü2) jeweils über eine Diodenbrückenschaltung (V12 bis V15 bzw. V1 bis V4) und einen ersten Plattenkeramikkondensator (C4 bzw. C1) mit zwei an jedem Plattenbelag diagonal angeordneten Anschlüssen gespeist werden, wobei dem Rückkopplungsübertrager (Ü10) jedes Senders noch ein Verstärker (V18) nachgeschaltet ist, der auf einen Ausgangsübertrager (Ü11/Ü12) arbeitet, über den auch die Betriebsspannung des Verstärkers (V18) zugeführt ist, dagegen der Rückkopplungsübertrager (Ü3) jedes Empfängers vorzugsweise seinen Ausgangsübertrager (Ü4/Ü5) direkt speist und daß das zwischengeschaltete frequenzselektive Filter aus einem weiteren Übertrager (Ü14/Ü15) mit Schutzwiderstand (R13), einem zweiten Keramikkondensator (C6) mit zwei an jedem Platten belag diagonal angeordneten Anschlüssen und einer Frequenzdrossel (FD) besteht.

2. Sichere Gleisfreimeldeeinrichtung nach Anspruch 1, dadurch gekennzeichnet, daß der Rückkopplungsübertrager (Ü3) des Empfängers mit einem Lichtsender (LS), einem Lichtleitkabel (L) und einem Lichtempfänger (LE) verbunden ist.

3. Sichere Gleisfreimeldeeinrichtung nach Patentanspruch 1, dadurch gekennzeichnet, daß von mehreren Sendern mindestens zwei verschiedene Frequenzen ausgesendet werden, so daß benachbarte Gleisabschnitte mit verschiedenen Frequenzen gespeist werden.

4. Sichere Gleisfreimeldeeinrichtung nach den Ansprüchen 1 und 3, dadurch gekennzeichnet, daß bei Verwendung von Isoliertrennstößen zwischen Fahrschiene und Empfängereingang eine Differentialgleisdrossel (D) eingeschaltet ist.

5. Sichere Gleisfreimeldeeinrichtung nach den Ansprüchen 1 und 3, dadurch gekennzeichnet, daß bei Verwendung von einschienig isolierten Gleisstromkreisen die Differentialgleisdrossel (D) ersetzt wird durch die durchgehende Verbindung einer der Fahrschienen.

6. Sichere Gleisfreimeldeeinrichtung nach den Ansprüchen 1 und 3, dadurch gekennzeichnet, daß bei durchgehend verschweißten Fahrschienen die Differentialgleisdrossel (D) durch einen elektrischen Trennstoß in Form eines Schienenverbinders ersetzt ist.

7. Sichere Gleisfreimeldeeinrichtung nach einem der vorhergehenden Ansprüche, dadurch gekennzeichnet, daß der Ausgangsübertrager des Empfängers (Ü4/Ü5) Mittelpunktschaltung aufweist und über Dioden (V10, V11) sowie einen dritten Plattenkeramikkondensator (C3) mit zwei an jedem Plattenbelag diagonal angeordneten Anschlüssen die Signale auf ein Stellglied (ST) überträgt.

**Claims**

1. Reliable railway-track-»clear« signalling device for monitoring a section of track, with a transmitter which has a resonant circuit incorporated in blocking oscillator circuitry with regenerative feedback, and with adjoining sections of track activated by different frequencies, and with track section receivers assembled similarly to the transmitters for receiving the modulated signals via frequency-selective filters, characterized in that the blocking oscillator circuits (V17, UE8, UE9, and V7, UE1, UE2 respectively) are each fed at their transmitting and receiving sides via a diode bridge circuit (V12 to V15, and V1 to V4, respectively) and a first ceramic plate condenser (C4 or C1) with two diagonally arranged terminals on each plate covering, whereby an additional transformer (V18) is coupled to the outlet side on the case of the regenerative feedback transmitter (UE10) with each transmitter and this takes effect on an output transformer (UE11/UE12) via which the operating voltage of the transformer (V18) is also supplied, whereas the regenerative feedback transmitter (UE3) of each receiver directly feeds its output transformer (UE4/UE5) in a preferred embodiment of the invention, and that the interposed frequency-selective filter comprises a further transmitter (UE14/UE15) with a safety resistor (R13), a second ceramic condenser (C6) with two diagonally arranged terminals on each plate covering and a frequency throttle (FD).

2. Reliable railway-track-»clear« signalling device according to claim 1, characterized in that the regenerative feedback transmitter (UE3) of the receiver is coupled to a light emitter (LS), a photoconductive cable (L) and a photocell (LE).

3. Reliable railway-track-»clear« signalling device according to claim 1, characterized in that two frequencies at least are transmitted by a multiplicity of transmitters so that adjoining sections of track can be fed with different frequencies.

4. Reliable railway-track-»clear« signalling device according to claims 1 and 3, characterized in that a differential track throttle (D) is employed where insulated spacer junctions are interposed between the rails and the receiver input.

5. Reliable railway-track-»clear« signalling device in accordance with claims 1 and 3, characterized in that the differential track throttle (D) is replaced by a continuous railway track join of one of the tracks in the case of insulated monorail current circuits.

6. Reliable railway-track-»clear« signalling device according to claims 1 and 3, characterized in that the differential track throttle (D) is replaced by an electrical spacer junction in the form of a rail joint in the case of continuously welded tracks.

7. Reliable railway-track-»clear« signalling device in accordance with any of the preceding claims, characterized in that the output transformer of the receiver (UE4/UE5) features centrepoint circuitry and transmits signals to a correcting element (ST) via diodes (V10, V11) as well as a third ceramic plate condenser (C3) with two diagonally arranged terminals on each plate covering.

**Revendications**

1. Dispositif sûr de contrôle de libération de la voie pour surveillance d'une section de voie, avec un émetteur qui comporte un circuit oscillant sous forme d'un auto-oscillateur à blocage avec transformateur de réaction et délivre des fréquences différentes aux sections de voie voisines, et des récepteurs constitués de même façon que l'émetteur, montés sur les sections de voie et recevant les signaux modulés par l'intermédiaire de filtres sélectifs en fréquence, ledit dispositif étant caractérisé en ce que les auto-oscillateurs à blocage (V17, U8, U9 ou V7, U1, U2) d'émission et de réception sont alimentés chacun par un pont de diodes (V12 à V15 ou V1 à V4) et un premier condensateur céramique plan (C4 ou C1) dont chaque armature comporte deux bornes disposées en diagonale, le transformateur de réaction (U10) de chaque émetteur étant en outre relié en aval à un amplificateur (V18) qui alimente un transformateur de sortie (U11/U12) par lequel est également appliqué la tension de service de l'amplificateur (V18), tandis que le transformateur de réaction (U3) de chaque récepteur alimente directement son transformateur de sortie (U4/U5); et le filtre sélectif en fréquence interposé est constitué par un transformateur (U14/U15) avec résistance protectrice (R13), un second condensateur céramique (C6) dont chaque armature comporte deux bornes disposées en diagonale, et une bobine de fréquence (FD).

2. Dispositif sûr de contrôle de libération de la voie selon revendication 1, caractérisé en ce que le transformateur de réaction (U3) du récepteur est relié à un photoémetteur (LS), un câble optique (L) et un photorécepteur (LE).

3. Dispositif sûr de contrôle de libération de la voie selon revendication 1, caractérisé en ce que plusieurs émetteurs délivrent au moins deux fréquences différentes, de sorte que des sections de voie voisines sont alimentées par des fréquences différentes.

4. Dispositif sûr de contrôle de libération de la voie selon revendications 1 et 3, caractérisé par une bobine différentielle de voie (D), insérée entre le rail de roulement et l'entrée du récepteur en cas d'emploi de joints isolants.

5. Dispositif sûr de contrôle de libération de la voie selon revendications 1 et 3, caractérisé en ce qu'en cas d'emploi de circuits de voie isolés sur une seule file de rails, la bobine différentielle de voie (D) est remplacée par la connexion continue d'un des rails de roulement.

6. Dispositif sûr de contrôle de libération de la voie selon revendications 1 et 3, caractérisé en ce qu'en cas d'emploi de rails de roulement soudés en barres longues, la bobine différentielle de voie (D) est remplacée par un joint de séparation électrique, constitué par un railbond.

7. Dispositif sûr de contrôle de libération de la voie selon une quelconque des revendications 1 à 6, caractérisé en ce que le transformateur de sortie du récepteur (U4/U5) comporte une prise médiane et transmet les signaux à un organe de réglage (ST) par l'intermédiaire de diodes (V10, V11) et d'un troisième condensateur céramique plan (C3) dont chaque armature comporte deux bornes disposées en diagonale.

Fig.1

# Fig.2

R13

Ü14

Ü15

C6

FD

3    4

Fig.3

# Fig.4

0 030 207

# Fig.5